# EUROPÄISCHE PATENTSCHRIFT

(11) **EP 1 522 767 B1**
(45) Veröffentlichungstag und Bekanntmachung des Hinweises auf die Patenterteilung: **18.07.2007**
(21) Anmeldenummer: 04017590.3
(22) Anmeldetag: 24.07.2004
(51) Int. Cl.: F16H 48/24, B60K 23/04, F16D 11/10, F16D 25/08

(54) **Formschlüssige Kupplung für Verteilergetriebe und Ausgleichsgetriebe für Kraftfahrzeuge**
Positive clutch for differential for vehicles
Embrayage positif pour engrenage differentiel

(30) Priorität: 29.07.2003 DE 10334450
(43) Veröffentlichungstag der Anmeldung: 13.04.2005
(73) Patentinhaber: ZF FRIEDRICHSHAFEN AG, 88038 Friedrichshafen (DE)
(72) Erfinder: Solka, Ulrich, 94081 Fürstenzell (DE); Frühwirth, Gerhard, 4274 Schönau (AT)

(56) Entgegenhaltungen:
- DE-A- 4 409 585
- US-A- 4 570 509
- US-A- 5 335 764
- US-A- 6 079 539

## Beschreibung

Die vorliegende Erfindung betrifft eine formschlüssige Kupplung für Verteilergetriebe und Ausgleichsgetriebe von Kraftfahrzeugen gemäß dem Oberbegriff des Patentanspruchs 1, mit einem durch ein Stellglied axial verschiebbarem Kupplungsteil und mit einer auf das Stellglied wirkenden Steuereinheit, wobei das getriebene Kupplungsteil mit einem ersten Radantriebsstrang treibend verbunden ist und wobei das treibende Kupplungsteil mit dem Hauptantriebsstrang und mit einem zweiten Radantriebsstrang in Verbindung steht.

Bei schweren Fahrzeugen, wie Lastkraftwagen und Traktoren, müssen hohe Drehmomente übertragen werden, sodass bei Einsatz von Reibungskupplungen große und kostenintensive Konstruktionen erforderlich sind. Für Kraftfahrzeuge mit zuschaltbarem Vorderradantrieb oder zuschaltbaren Sperren für Ausgleichsgetriebe, wobei es sich sowohl um Achsdifferentiale als auch um Zentraldifferentiale handeln kann, werden zur Vermeidung weiterer großer Reibungskupplungen formschlüssige Kupplungen verwendet.

Diese herkömmlichen Kupplungen sind jedoch noch mit dem Nachteil behaftet, dass sie im Stillstand meistens gar nicht und während der Fahrt nur von einem sehr geübten Fahrer schaltbar sind. Dabei müssen die beiden Kupplungsteile bei geringer Drehzahldifferenz gefühlvoll in Eingriff gebracht werden und zwar meistens, bevor das Fahrzeug schwieriges Gelände erreicht, in dem auf Vierradantrieb umzuschalten, bzw. die Differentialsperre einzuschalten ist, wodurch der Reifenverschleiß erhöht wird. Auch das Ausrücken ist schwierig, weil dabei bisweilen erhebliche drehmomentbedingte Reibungskräfte zwischen den Klauen der auseinander zu ziehenden Kupplungsteile zu überwinden sind. Oftmals wird eine Feder zum Auskuppeln verwendet, jedoch erhöht sich dadurch der Kraftaufwand beim Einkuppeln. Die Probleme der Schaltbarkeit führen dazu, dass der Allradantrieb oder die Differentialsperre oft länger als notwendig eingeschaltet bleibt und ein Ausschalten bisweilen ganz vergessen wird, wodurch es bei Straßenfahrt zu Lenkschwierigkeiten kommen kann.

Um diese Nachteile zu vermeiden, werden heutzutage vielfach hydraulische, pneumatische oder elektrische Kraftverstärker als Stellglieder eingesetzt. Durch die Notwendigkeit des gefühlvollen Einrückens ist eine automatische Einrückung nur aufwendig zu realisieren.

Nach vereinzelt im Stand der Technik anzutreffender Auffassung müssen die Stellglieder sehr groß dimensioniert sein, um die Kupplung einzurücken, während der Fahrt eingerückt zu halten und danach wieder ausrücken zu können. Dies soll zu einem erhöhten Energieverbrauch führen und zwar bei Einsatz einer hydraulischen oder pneumatischen Betätigung auf Grund der Leckagen durch ein andauerndes Laufen der Öl-oder Luftpumpe, während bei elektrischen Stellgliedern thermische Verluste auftreten sollen.

Soll die Kupplung vollautomatisch eingerückt werden, besteht ein weiteres Problem darin, dass als Einrückkriterium fahrzeugseitig der Schlupf der angeriebenen Räder und kupplungsseitig die Drehzahldifferenz zwischen den beiden Kupplungsteilen, von der die Möglichkeit des Einrückens ohne Stillstand des Fahrzeuges abhängt, maßgebend sind, wohingegen als Ausrückkriterium das auf die Kupplung wirkende Drehmoment maßgebend ist.

Ist die Kupplung eingerückt, so sind die jeweiligen Antriebsstränge starr miteinander verbunden, sodass als Kriterium zum erneuten Ausrücken keine Drehzahldifferenz zwischen den Kupplungsteilen zur Verfügung steht. Die alternative Messung von Drehmomenten ist aber nicht nur aufwendig, sondern bei vertretbarem Aufwand zu ungenau, um ein Ausrücken bei einem bestimmten Drehmoment sicherzustellen. Das automatische Ausrücken ist auch insofern problematisch, weil es gegen die Reibung zwischen den durch das übertragene Moment gegen einander gepressten Kupplungsflächen erfolgen muss.

Diese Nachteile und Probleme bestehen auch im Zusammenhang mit den Sperren von Achsdifferentialen und den Sperren von Zwischendifferentialen, wie sie in den aufwendigeren Verteilergetrieben verwendet werden sowie im Zusammenhang mit der starren Zuschaltung des Vorderachsantriebes bei weniger aufwendigen Verteilergetrieben.
Um die erwähnten Nachteile und Probleme zu vermeiden und eine Kupplung einschließlich ihrer Betätigungseinrichtung dahingehend zu verbessern, dass die Kupplung sich zum richtigen Zeitpunkt selbsttätig aus- und einschaltet, wurde in der EP 0 510 457 eine Kupplung mit zwei formschlüssigen Kupplungsteilen mit Mitnehmern vorgeschlagen, bei der
- das getriebene Kupplungsteil mit einem ersten Radantriebsstrang treibend verbunden ist,
- das treibende Kupplungsteil mit einem Hauptantriebsstrang und mit einem zweiten Radantriebsstrang in Verbindung steht,
- die Kupplungsteile Mitnehmer mit in Umfangsrichtung wirkenden Flanken aufweisen,
- eine Steuereinheit eingangsseitig mit Drehzahlsensoren an beiden Kupplungsteilen bzw. den damit zusammenhängenden Strängen und ausgangsseitig mit einem einfach wirkenden Einrückglied verbunden ist und bei Passieren vorgegebener Schwellwerte der Drehzahldifferenz der Kupplungsteile das Einrückglied gegen die Kraft einer Feder beaufschlagt, wobei
- die Kraft der Feder im wesentlichen gleich der axialen Reibungskraft zwischen den Mitnehmern der Kupplungsteile bei einem sehr geringen übertragenen Drehmoment an den Kupplungsteilen ist, bei dessen Unterschreiten das verschiebbare Kupplungsteil selbsttätig ausgerückt wird.

Das bei dieser bekannten Kupplung verwendete Einrückglied ist ein Zylinder mit einer Kolbenstange und einem Kolben, dessen eine Seite von einem Druckfluid beaufschlagt wird, während die andere Seite von der erwähnten Feder beaufschlagt wird.

Nach der Lehre dieser Veröffentlichung bleibt die einmal eingerückte Kupplung durch das Zusammenwirken der Kupplung mit in Umfangsrichtung wirkenden Flanken als Klauenkupplung oder als Zahnkupplung mit einer genau bemessenen Federkraft nur durch die Übertragung eines Drehmoments eingerückt und wird erst bei unterschreiten eines bestimmten Drehmoments durch die Feder ausgerückt. Die Steuereinheit kann damit auf das Einrücken beschränkt sein und die Drehzahlsensoren an den beiden Kupplungsteilen bzw. an den damit verbundenen Antriebssträngen ermöglichen das Einrücken der Kupplung im richtigen Moment nach einem einheitlichen Einrückkriterium, das heißt den vorgegebenen Schwellwerten der Drehzahldifferenz zwischen den Kupplungsteilen.

Diese Schwellwerte liegen bei jenen Drehzahldifferenzen, bei denen die formschlüssigen Kupplungsteile noch gut in Eingriff gebracht werden können. Vorzugsweise entsprechen diese der Drehzahldifferenz bei Durchrutschen eines Rades, liegen aber über der Drehzahldifferenz bei eingeschlagener Lenkung. Damit entfällt ein Lenkwinkelsensor mitsamt seiner Logik.

In dieser Veröffentlichung ist ein Ausführungsbeispiel eines Verteilergetriebes dargestellt und beschrieben, das eine Eingangswelle, eine Zwischenwelle und ein Antriebszahnrad aufweist, das Teil einer Antriebswelle ist, wobei diese Bauteile den Hauptantriebsstrang bilden. In der Antriebswelle ist eine Vorderachsantriebswelle gelagert, die über ein Kardangelenk eine Vorderachse antreibt, wobei diese Vorderachsantriebswelle zum ersten Radantriebsstrang gehört. Die Antriebswelle ist ferner über ein weiteres Kardangelenk mit dem zweiten Radantriebsstrang verbunden, zu dem die Hinterachse gehört, wobei letzterer permanent angetrieben wird. Der erste Radantriebsstrang wird hingegen nur dann angetrieben, wenn die formschlüssige Kupplung, die hier als Klauenkupplung ausgebildet ist, eingerückt ist. Das einrücken erfolgt mittels des von einer Steuereinheit angetriebenen Einrückgliedes, das aus dem erwähnten Zylinder mit dem Kolben und der Kolbenstange besteht, wobei das Einrückglied gegen die Kraft der oben beschriebenen Feder beaufschlagt wird und das Lösen der Sperre mittels eben dieser Feder bewerkstelligt wird. Für weitere Einzelheiten des konstruktiven Aufbaus der Kupplung wird auf diese Veröffentlichung verwiesen.

Die Anmelderin hat festgestellt, dass die in der Veröffentlichung EP 0 510 457 beschriebene Feder mit dem Nachteil behaftet ist, dass die erforderliche Einrückkraft erhöht wird und dass die Dynamik des Einrückvorgangs, die wegen der Differenzdrehzahl zwischen den zwei formschlüssigen Kupplungsteilen zeitkritisch ist, ungünstig beeinflusst wird.

Aufgabe der vorliegenden Erfindung ist es daher, die aus der genannten Veröffentlichung EP 0 510 457 bekannte Kupplung für ein Verteilergetriebe und Ausgleichsgetriebe für ein Fahrzeug dahingehend zu verbessern, dass diese Nachteile vermieden werden.

Ausgehend von der Kupplung der eingangs näher genannten Art erfolgt die Lösung dieser Aufgabe mit den im kennzeichnenden Teil des Patentanspruchs angegebenen Merkmalen. Weitere Ausgestaltungen sind den Unteransprüchen zu entnehmen.

Gemäss der vorliegenden Erfindung wird also die Wirkung der Feder für die Beaufschlagung des Einrückgliedes zum Lösen der Sperre durch die zweite Beaufschlagungsrichtung eines doppeltwirkenden Elementes ersetzt.

Das doppelwirkende Element ist ein durch ein Fluid beaufschlagbarer Betätigungszylinder.

Durch die Kombination der aus der Veröffentlichung EP 0 510 457 bekannten Sperre mit einem doppeltwirkenden Betätigungszylinder, entgegen der Lehre der EP 0 510 457 mit einem einfach wirkenden Betätigungszylinders und der Feder, ist es möglich, die Sperre ohne Gegenkraft (neben den unvermeidlichen Reibungskräften) zu betätigen, wobei die Gegenkraft, welche das in der oben erwähnten Veröffentlichung beschriebene selbsttätige Ausrücken ermöglicht, erst nach Einrücken der Sperre aufgebracht wird.

Diese Gegenkraft ist durch die Wahl des Kolbendurchmessers bei Betätigung durch ein Druckmedium entsprechend den Erfordernissen der Klauengeometrie (Hinterschnitt) anpassbar, bzw. ist durch Variation des Gegendrucks mittels beispielsweise eines Ventils auch während des Betriebes als Funktionsparameter dieser Kraft veränderbar.

Durch Wahl unterschiedlicher Kolbenquerschnitte (Differentialzylinder) kann die Ein- und Ausrückkraft bei gleichem Fluiddruck unterschiedlich groß gewählt werden.

Es wurde ferner gefunden, dass, im Gegensatz zu den Aussagen in der erwähnten EP 0 510 457, keinerlei Nachteile mit der Verwendung eines doppeltwirkenden Betätigungszylinders an Stelle eines einfach wirkenden Betätigungszylinders und einer Feder verbunden sind, da insbesondere die aufzubringende Gegenkraft gering ist, das heißt im Wesentlichen gleich der axialen Reibungskraft zwischen den Mitnehmern bei einem sehr geringen übertragenen Drehmoment ist, mit der vorteilhaften Folge, dass keine wesentlichen Energieverluste auftreten und dass der Bauaufwand gering ist.

Die Vorteile, die mit der erfindungsgemäßen Ausgestaltung der Kupplung erzielt werden, lassen sich wie folgt zusammenfassen:
- verbesserte Dynamik der Sperrenbetätigung,
- Einschalten bei größeren Differenzdrehzahlen, verglichen mit dem Stand der Technik,
- Einstellbarkeit der Gegenkraft als Funktionsparameter, auch in Größenordnungen, die bei einem Einschalten gegen die in der erwähnten EP 0 510 457 beschriebenen Feder den Einschaltvorgang in unzulässiger Weise behindern würden und
- Einstellbarkeit des Zeitpunktes des Wirkens der Gegenkraft als Funktionsparameter.

Von der konstruktiven Seite her gesehen kann die Gegenkraft entweder direkt an der Sperre aufgebracht werden oder auch durch zwei separate Aktuatoren unterschiedlicher Bauart.

Es sei ferner betont, dass neben fluidbetätigten Zylindern auch andere physikalische Effekte und Wirkgeometrien zur Aufbringung der Gegenkraft einsetzbar sind.

Weiter Merkmale sind der Figuren-Beschreibung zu entnehmen.

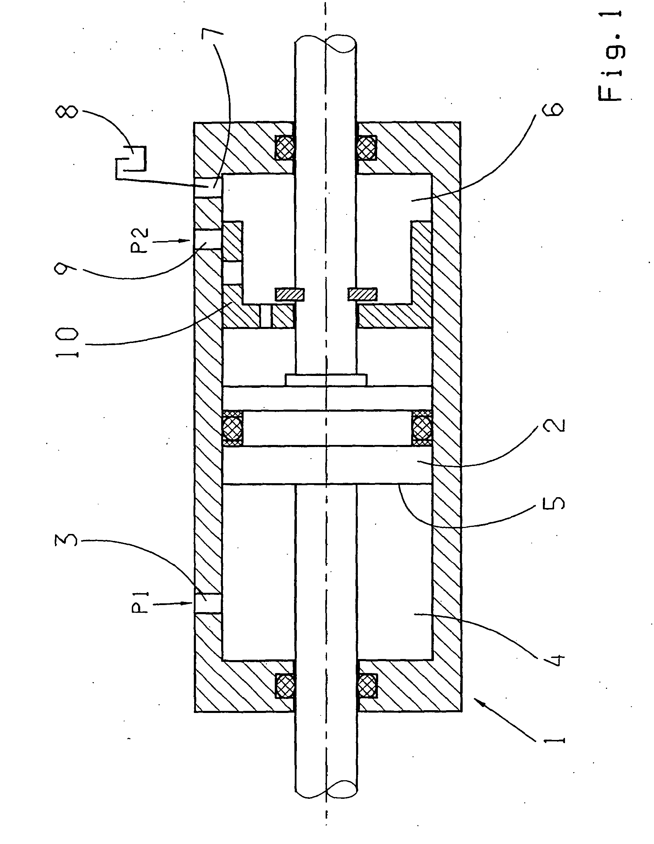

Die einzige Figur zeigt eine Betätigungseinrichtung für das in der EP 0 510 457 B1 gezeigte Verteiler- und Ausgleichsgetriebe.

Die Betätigungseinrichtung besteht aus einem doppelt wirkenden hydraulischen Zylinder 1, in welchem ein Kolben 2 verschiebbar gelagert ist. Soll die Sperre in Schließrichtung betätigt werden, wird Druck über eine Druckzuführung 3 in einen ersten Kolbenraum 4 geleitet, wodurch dieser Druck auf die Kolbenfläche 5 wirkt. Der Kolbenraum 6 bleibt bis zu einem definierten Kolbenweg entlüftet, da der Kolbenraum 6 über eine Leitung 7 mit einem Druckmittelreservoir 8 verbunden ist. Eine Druckzuführung 9, welche ebenfalls mit einer nicht gezeigten Druckmittelquelle verbindbar ist, wird, wenn der Kolben 2 sich in seiner Ausgangsstellung befindet, von einem Steuerschieber 10 verschlossen. Durch die Druckbeaufschlagung des Kolbenraums 4 bewegt sich der Kolben 2 und der Steuerschieber 10 in Schließrichtung der Sperre, wobei der Druck im Kolbenraum 4 beim Beginn der Bewegung überwiegt, da der Kolbenraum 6 über die Leitung 7 mit dem Druckmittelreservoir 8 verbunden ist. Ab einem definierten Verschiebeweg, bei welchem sich die Sperre im Schließzustand befindet, verschließt der Steuerschieber 10 die Leitung 7 und öffnet die Druckzuführung 9, wodurch der Raum 6 ebenfalls mit Druck beaufschlagt wird. Da die Sperre sich im geschlossenen Zustand befindet, wird der Druck im Kolbenraum 4 reduziert und bei anliegendem Drehmoment die Sperre im geschlossenen Zustand gehalten. Fällt das Drehmoment unterhalb eines definierten Niveaus ab, so überwiegt die Kraft aus dem Druck des Kolbenraums 6, wodurch die Sperre im Öffnungssinne betätigt wird.
(Weiter auf Blatt 10 der ursprünglich eingereichten Unterlagen.)

In einer weiteren Ausgestaltungsform besteht die Möglichkeit, den Steuerschieber 10 entfallen zu lassen und den Kolbenweg über einen Positionssensor zu ermitteln und in Abhängigkeit des Kolbenwegs die Druckzuführung 3, die Druckzuführung 9 und die Leitung 7 über Ventile mit Druckmittelquellen oder dem Druckmittelreservoir zu verbinden.

### Bezugszeichen

- 1: Hydraulikzylinder
- 2: Kolben
- 3: Druckzuführung
- 4: Kolbenraum
- 5: Kolbenfläche
- 6: Kolbenraum
- 7: Leitung
- 8: Druckmittelreservoir
- 9: Druckzuführung
- 10: Steuerschieber

## Patentansprüche

1. Formschlüssige Kupplung für Kraftfahrzeuge mit zuschaltbarem Vorderradantrieb oder für Kraftfahrzeuge mit zuschaltbaren Kupplungen in Ausgleichsgetrieben, wobei die formschlüssige Kupplung zwei Kupplungsteile mit Mitnehmern aufweist, wobei die Kupplungsteile Mitnehmer mit in Umfangsrichtung wirkenden Flanken aufweisen, wobei die Kupplung über ein Einrückglied einrückbar ist und die eingerückte Kupplung bei vorhandener Gegenkraft, welche die Kupplung ausrückt, bis zu einem Unterschreiten eines bestimmten Drehmomentes nur durch das Zusammenwirken der Flanken eingerückt bleibt, **dadurch gekennzeichnet, dass** das Einrückglied ein doppeltwirkender durch ein Fluid beaufschlagbarer Betätigungszylinder ist, das derart ansteuerbar ist, dass es die Kupplung nahezu ohne Gegenkraft betätigt, indem ein Teil des Betätigungszylinder beaufschlagt ist und dass es die für das selbsttätige Ausrücken erforderliche Gegenkraft erst nach Einrücken der Kupplung durch Beaufschlagen des anderen Teils des Betätigungszylinders aufbringt.

2. Formschlüssige Kupplung nach Anspruch 1, **dadurch gekennzeichnet, dass** der Betätigungszylinder einen Kolben mit unterschiedlichen Kolbenflächen aufweist.

3. Formschlüssige Kupplung nach Anspruch 1, **dadurch gekennzeichnet, dass** die Kupplung bei Passieren vorgegebener Schwellenwerte der Drehzahldifferenz der Kupplungsteile ohne Gegenkraft betätigbar ist.

4. Formschlüssige Kupplung nach Anspruch 1, **dadurch gekennzeichnet, dass** das doppeltwirkende Element einen Steuerschieber aufweist, welcher das doppeltwirkende Element automatisch bei im Schließsinne betätigter Kupplung mit Druck im Öffnungssinne beaufschlagt.

## Claims

1. The invention relates to a positive clutch for motor vehicles with on-demand FWD, or for motor vehicles with disengageable clutches in differentials, with the slip-free clutch featuring two clutch components with drivers, and the clutch components featuring drivers with flanks acting in circumferential direction, with the clutch being engageable by an engaging element, and with the engaged clutch - under a counteracting, clutch-disengaging force - remaining engaged only as a result of the converging flanks until the torque drops below a certain level, **characterized in that** the engaging element is a double-acting, fluid-actuated control cylinder, controllable in such a way that the clutch is actuated with hardly any counteracting force by part of the control cylinder being actuated, and that the counterforce required for self-acting disengagement is generated only after engagement of the clutch through actuation of the other part of the control cylinder.

2. A positive clutch according to claim 1, **characterized in that** the control cylinder features a piston with dissimilar piston surfaces.

3. A positive clutch according to claim 1, **characterized in that** beyond specified speed differential thresholds of the clutch components, the clutch can be actuated without counterforce.

4. A positive clutch according to claim 1, **characterized in that** the double-acting element features a control slide which automatically pressurizes the double-acting element for opening action while the clutch is actuated for closing action.

## Revendications

1. Embrayage à action positive pour véhicules automobiles avec traction avant embrayable ou pour véhicules automobiles possédant des embrayages embrayables dans des différentiels, dans lequel l'embrayage à action positive comporte deux parties d'embrayage pourvues d'entraîneurs, dans lequel les parties de l'embrayage comportent des entraîneurs pourvus de flancs agissant dans la direction circonférentielle, dans lequel l'embrayage peut être embrayé au moyen d'un organe d'embrayage et l'embrayage embrayé reste embrayé par la seule coopération des flancs en présence d'une force antagoniste qui débraye l'embrayage jusqu'à ce qu'on tombe en dessous d'un couple déterminé, **caractérisé en ce que** l'organe d'embrayage est un cylindre d'actionnement à double effet qui peut être sollicité par un fluide et qui peut être commandé de manière qu'il actionne l'embrayage presque sans force antagoniste par le fait qu'une partie du cylindre d'actionnement est sollicitée et qu'elle applique la force antagoniste nécessaire pour le débrayage automatique seulement après l'embrayage de l'embrayage par sollicitation de l'autre partie du cylindre d'actionnement.

2. Embrayage à action positive selon la revendication 1, **caractérisé en ce que** le cylindre d'actionnement comporte un piston possédant des surfaces de piston différentes.

3. Embrayage à action positive selon la revendication 1, **caractérisé en ce que**, en cas de dépassement de seuils prédéterminés de la différence de vitesse de rotation des parties de l'embrayage, l'embrayage peut être actionné sans force antagoniste.

4. Embrayage à action positive selon la revendication 1, **caractérisé en ce que** l'élément à double effet comporte un coulisseau de commande qui sollicite automatiquement l'élément à double effet avec une pression agissant dans le sens de l'ouverture lorsque l'embrayage est actionné dans le sens de la fermeture.
